# EUROPEAN PATENT SPECIFICATION

(11) **EP 1 512 344 B1**
(45) Date of publication and mention of the grant of the patent: **07.06.2006**
(21) Application number: 04425574.3
(22) Date of filing: 29.07.2004
(51) Int. Cl.: A47B 81/00, B65G 1/02

(54) **A support for barrels**
Lagerbock für Fässer
Support pour tonneaux

(30) Priority: 02.09.2003 IT vr20030106
(43) Date of publication of application: 09.03.2005
(73) Proprietor: Lafal S.n.c. di Franchini A. & C., 37060 Quaderni Di Villafranca (Verona) (IT)
(72) Inventor: Franchini, Antonello, 37069 Villafranca (Verona) (IT); Franchini, Albino, 37067 Valeggio Sul Mincio (Verona) (IT)
(74) Representative: Ponchiroli, Simone

(56) References cited:
- EP-A- 1 190 963
- GB-A- 2 269 356

## Description

The present invention relates to a support for barrels of the type described in the preamble to claim 1, for supporting a barrel positioned horizontally.

In particular, the present invention relates to supports for barrels which allow the barrel to rotate about its own axis positioned horizontally.

At present, various embodiments of this type of supports are known. Some examples are described in patents FR 2 801 043, EP 1 036 525 and EP 1 190 963. Generally speaking, the support for the barrel is made of four idle wheels positioned at the vertices of a rectangle.

At present, for each type of barrel there is a support designed, on one hand in such a way that the weight of the barrel is discharged according to the methods indicated above, and on the other hand in such a way that the barrel does not rest on the wheels at its hoops.

Single supports may be connected to one another to form complex structures which allow a plurality of barrels to be supported simultaneously (examples of structures of this type are described in the above-mentioned patents).

However, the supports currently used have the significant disadvantage of only being suitable for supporting a limited type of barrels. As a result, when the cellar man changes the barrels, in many cases he is forced to find barrels the same as those previously used. If these are not found, or if the type has to be changed for a different wine-making process, the supports often also have to be changed, considerably increasing the costs.

In this situation, the technical need which forms the basis of the present invention is to provide a support for barrels which overcomes the above-mentioned disadvantages, and in particular which can be used to support a wide variety of barrels, with different dimensions and shapes.

The technical need specified and the aims indicated are substantially achieved by a support for barrels as described in the claims herein.

Other features and advantages of the invention are more clearly indicated in the detailed description which follows with reference to the accompanying drawings which illustrate several preferred non-restricting embodiments of a support for barrels and in which:
- Figure 1 is a three quarter axonometric view of a support for barrels made in accordance with the present invention;
- Figure 2 is a front view, with some parts transparent, of the support illustrated in Figure 1 supporting a barrel in a first operating condition;
- Figure 3 is a front view, with some parts transparent, of the support illustrated in Figure 1 supporting a barrel in a second operating condition;
- Figure 4 is a side view of the support illustrated in Figure 1 supporting a barrel in a third operating condition;
- Figure 5 is a side view of the support illustrated in Figure 1 supporting a barrel in a fourth operating condition;
- Figure 6 illustrates a first embodiment of a complex support structure made with a plurality of supports in accordance with the present invention;
- Figure 7 illustrates a second embodiment of a complex support structure made with a plurality of supports in accordance with the present invention;
- Figure 8 is an enlarged detail of the support illustrated in Figure 2; and
- Figure 9 is an enlarged detail of the support illustrated in Figure 3 corresponding to the detail illustrated in Figure 8.

With reference to the accompanying drawings, the numeral 1 denotes as a whole a support for barrels 2 in accordance with the present invention.

However, it should be remembered that the present invention relates to a support 1 for barrels 2 with any shape (although the accompanying drawings represent several preferred embodiments) which comprises a supporting structure 3 with a lower supporting base 4, and means 5 for supporting a barrel 2 positioned in such a way that it is resting on its side, in which the supporting means 5 comprise a plurality of idle wheels 6 designed to act against the side of the barrel 2 to allow the barrel to rotate about its own axis.

At least one of the wheels 6 is made in such a way that it is mobile relative to the others, so that the position of the supporting means 5 can be varied and so the support 1 can be adapted to barrels 2 of a different size. However, advantageously, all of the wheels 6 are mobile.

As illustrated in the accompanying drawings, there are preferably four wheels 6, even if the support 1 can function with any number of wheels 6, provided that they are shaped and positioned appropriately.

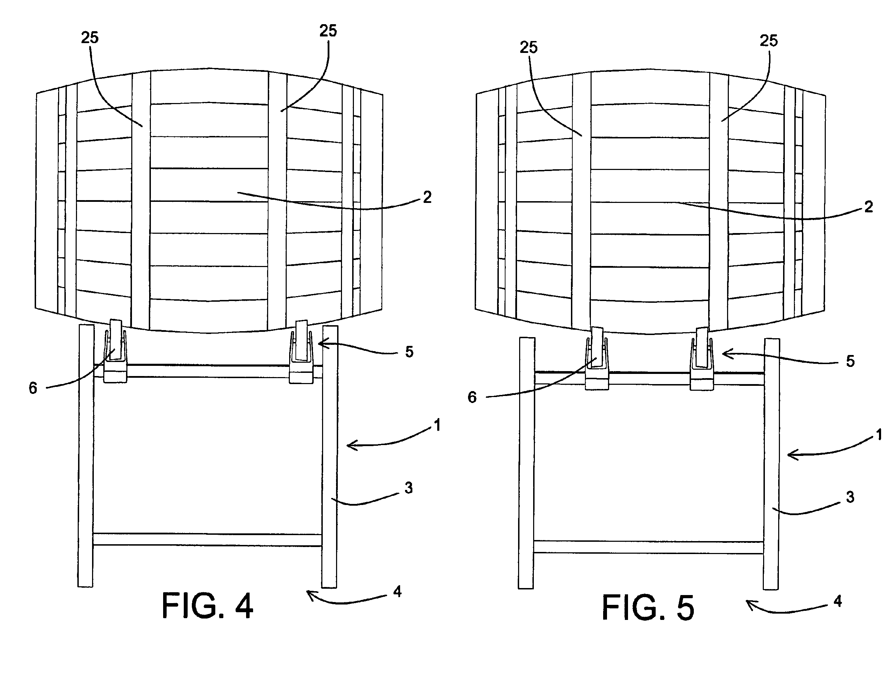

As illustrated in Figure 4, the wheels 6 may have a horizontal axis and consist of truncated cones so that they are better adapted to the side profile of the barrel 2.

Alternatively, in other embodiments they may have an axis parallel with a line at a tangent to the side surface of the barrel 2 and a cylindrical shape.

In the preferred embodiment, each idle wheel 6 mobile relative to the others may be moved along a direction which extends mainly parallel with the axis of the barrel 2 (preferably a horizontal direction) and regulated in a plane transversal to the axis of the barrel 2 (a plane which is preferably vertical).

In more complex embodiments the wheels 6 may also run along a direction which follows the profile of the barrel 2 at a constant distance.

In the embodiments illustrated, the wheel 6 is moved relative to the supporting structure 3 by a connecting element 7 attached to the supporting structure 3, with two prongs 8 between which the wheel 6 is pivoted.

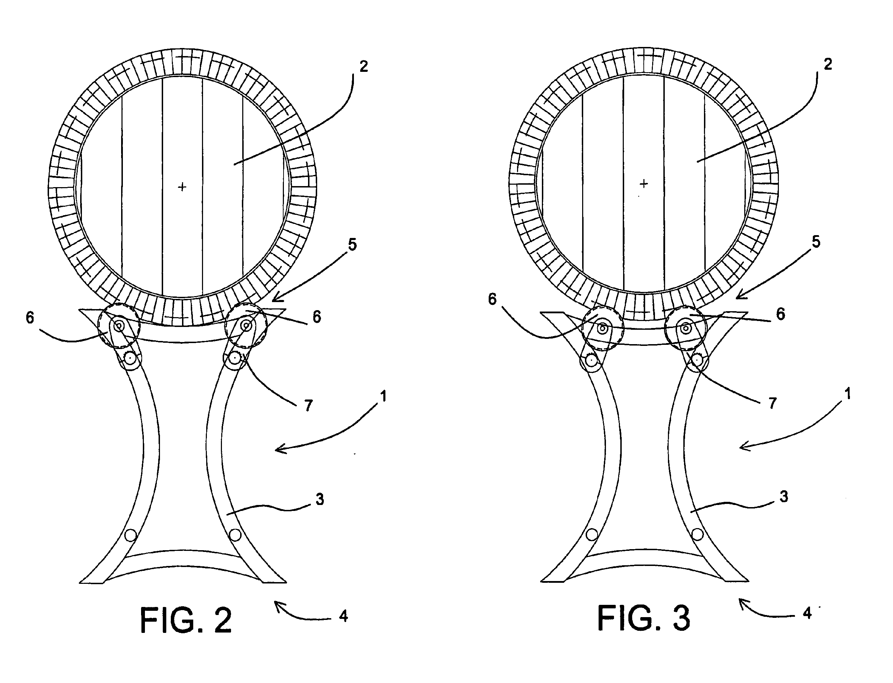

The connecting element 7 is mounted on a tubular portion 9 of the supporting structure 3, and can be moved both along the tubular portion 9 (as illustrated in Figures 4 and 5), and so as to adjust its angle relative to the tubular portion 9 (as illustrated in Figures 2 and 3).

In particular, the tubular portion 9 illustrated in the accompanying drawings has a circular cross-section and at least one longitudinal guide 10, and the connecting element 7, in turn, consists of two separable parts 11 which between them form a through-hole 12 whose cross-section matches that of the tubular portion 9, having at least one counter-guide 13 that can be attached to the longitudinal guide 10 on the tubular portion 9.

Connection of the guide 10 to the counter-guide 13 allows sliding of the connecting element 7 along the tubular portion 9 to be guided, preventing unwanted rotation.

In the embodiments illustrated the guide 10 and the counter-guide 13 respectively consist of a projecting tooth and a groove, but in other embodiments the guide 10 may be groove-shaped and the counter-guide 13 may be a projecting tooth.

To allow adjustment of the angle of the wheel 6, the edge of the through-hole 12 of the connecting element 7 has a plurality of counter-guides 13 all of which can be attached to the longitudinal guide 10, and separated from one another by a predetermined angle.

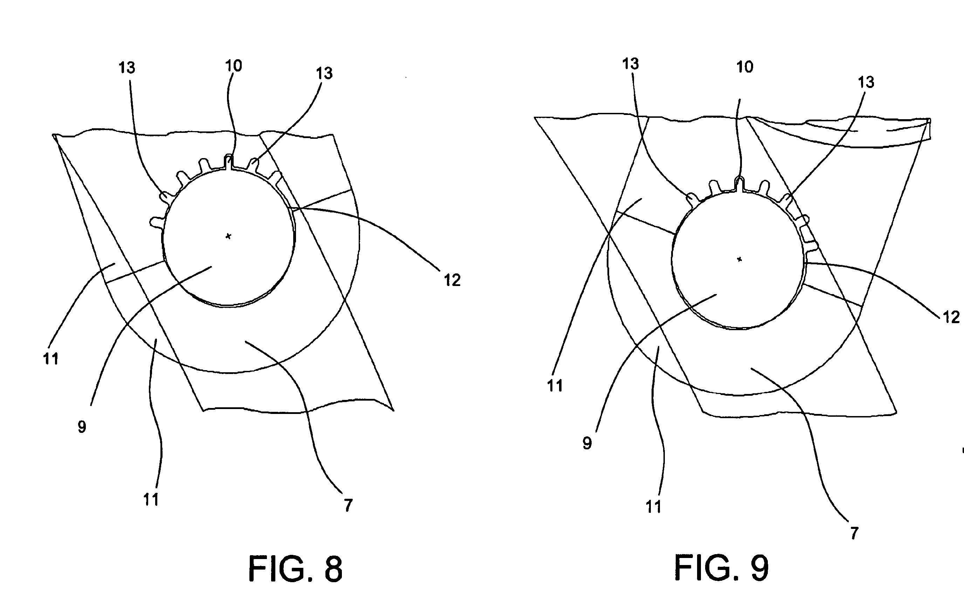

In this way, attaching each counter-guide 13 to the guide 10 gives the wheel 6 a different angular position, as illustrated in Figures 8 and 9 which illustrate the detail of a connecting element 7 in two different angular positions.

As already indicated, in the embodiments illustrated the connecting element 7 consists of two separable parts 11, which between them form the through-hole 12, and which are made integral with one another by suitable constraining means (not illustrated), such as a bolt, through or not, a hinge, a quick coupling, etc.

Therefore, the connecting element 7 is removably mounted on the tubular portion 9 for selective attachment of each counter-guide 13 to the guide 10. For this purpose it is sufficient to separate the two parts 11 of which it consists, then reassemble them in the correct position.

Advantageously, the connecting element 7 is also equipped with locking means which allow and selectively enable the possibility of moving the connecting element relative to the supporting structure 3. In the embodiment illustrated in the accompanying drawings, the locking means comprise the guide 10 which prevents rotation, and the constraining means (not illustrated), which prevent sliding. The through-hole 12 has substantially the same cross-section as the tubular portion 9, so that when the constraining means are suitably tightened the connecting element 7 can be locked in position.

In other embodiments the tubular portion 9 does not have a circular cross-section, and the connecting element 7 is correctly positioned without the guide 10 and counter-guide 13 system.

For example, if the cross-section of the tubular portion 9 is polygonal and each through-hole 12 has a profile with a plurality of seats shaped to match the edges of the tubular portion 9 a similar moderate angular adjustment is achieved.

For continuous angular adjustment, a tubular portion 9 without guides 10, and a through-hole 12 shaped to match it are sufficient, provided that the tightening of the constraining means guarantees the creation, between the connecting element 7 and the tubular portion 9, of enough friction to prevent the connecting element 7 from rotating.

As indicated, the technical features described so far may be applied to any type of support 1 for barrels 2 currently known, such as those described in the above-mentioned patents FR 2 801 043, EP 1 036 525 and EP 1 190 963.

In particular, the present invention can be applied indiscriminately even to supports 1 which have a plurality of supporting means 5 for simultaneously supporting a plurality of barrels 2, whatever the reciprocal positioning of the supporting means 5 designed to support each barrel 2.

The accompanying drawings illustrate two types of supports 1 made in accordance with the present invention.

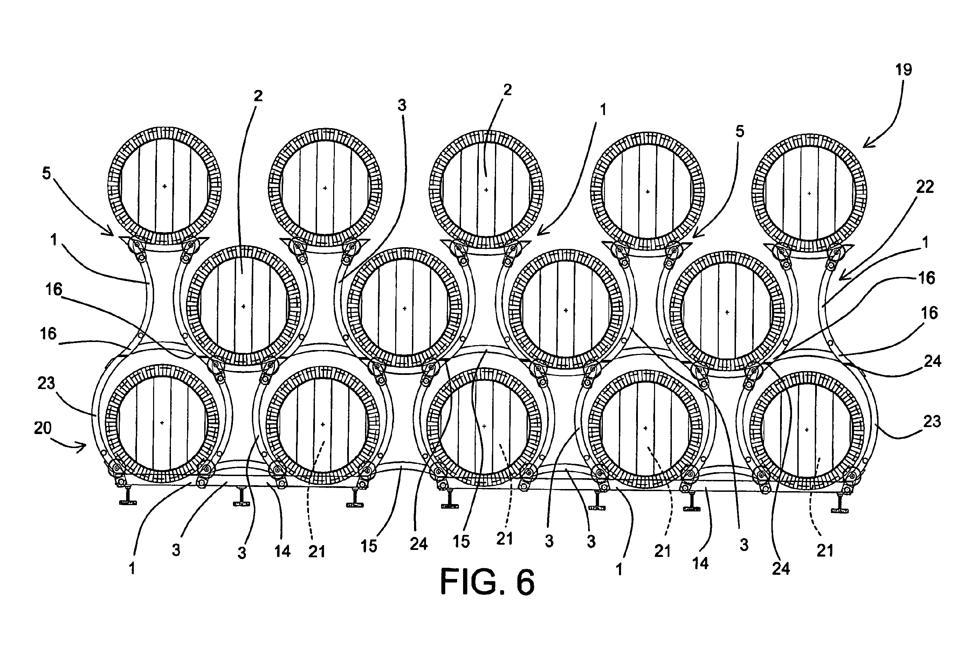

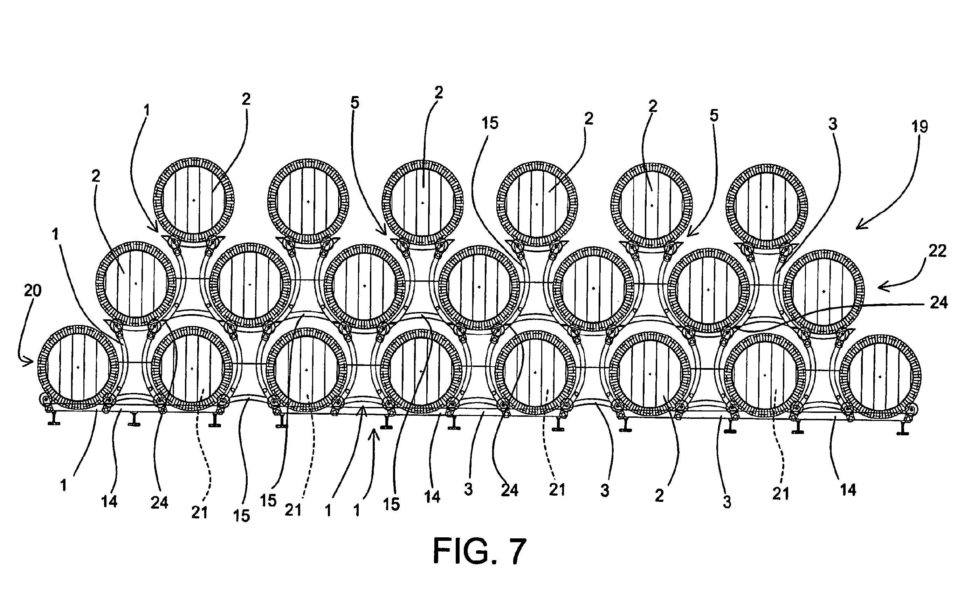

The first type of supports 1 (hereinafter referred to as the first supports 14), only visible in the lower part of Figures 6 and 7, has a plurality of supporting means 5 for simultaneously supporting a plurality of barrels 2.

For example, Figure 6 illustrates two first supports 14 side-by-side, one supporting two barrels 2 and the other supporting three barrels.

On said first supports 14, the plurality of supporting means 5 is aligned along a horizontal row, supporting a plurality of reclining barrels 2 positioned side-by-side.

In other embodiments there may be supports 1 shaped in such a way as to support a plurality of barrels 2 even arranged in rows on top of one another, such as the type described in the above-mentioned patents FR 2 801 043 and EP 1 190 963.

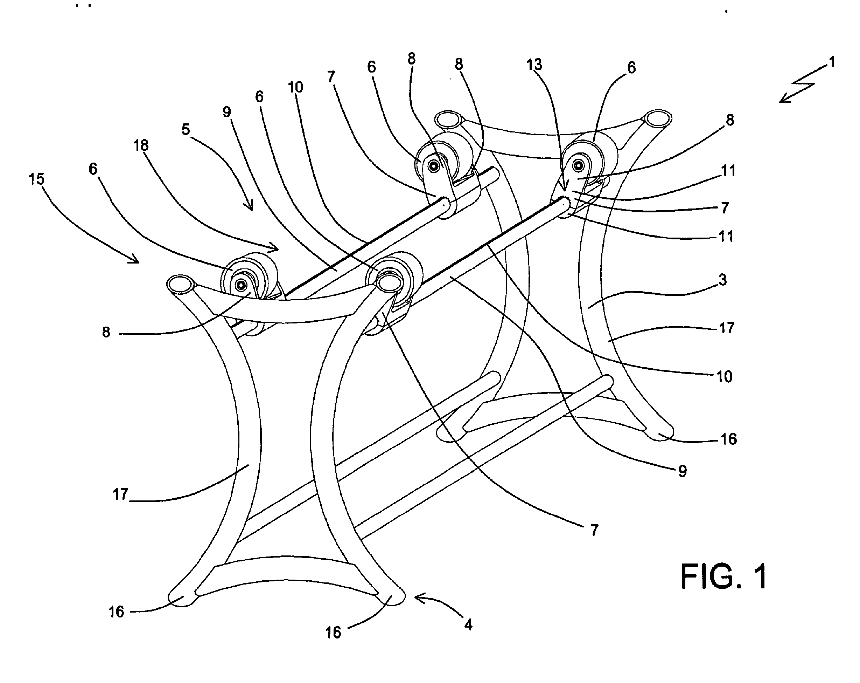

The second type illustrated in the accompanying drawings and in particular in Figures 1 to 5, shows the supports 1 for barrels 2 (hereinafter referred to as the second supports 15) which represent modules that allow the construction even of complex structures (Figures 6 and 7).

A second support 1 of this type comprises, in addition to the lower supporting base 4 consisting of four tubular ends 16, an upright portion 17 extending vertically upwards from the supporting base 4 and an upper portion 18 connected to the upright portion 17, consisting of two tubular portions 9 and bearing the barrel 2 supporting means 5.

The present invention also relates to support structures 19 for a plurality of barrels 2 obtained, for example, by joining together a plurality of supports 1 made in accordance with the present invention.

Figures 6 and 7 illustrate two support structures 19 obtained by combining the first supports 14 and several second supports 15.

In particular, the first supports 14 form the base of the structure, whilst the second supports 15 are arranged in one or more rows on top of and offset from one another, above the first supports 14.

In the first lower row 20 of second supports 15, attached directly to the first supports 14 forming the base, each pair of adjacent second supports 15 forms between it a seat 21 for a barrel 2 at the supporting means 5 on the first support 1 below.

In contrast, in the rows 22 above the first row 20, each second support 1 is positioned above a seat 21 for a barrel 2 in the row below and between two adjacent second supports 15 in said row below. In this way, each pair of adjacent second supports 15 in the upper rows forms between it a seat for a barrel 2 at supporting means 5 present on a second support 1 in the row below (on which both of the second supports 15 in the pair partly rest).

As illustrated in the accompanying drawings, a second support 1 in the first lower row 20 may also be mounted so that it is between two first supports 14.

In addition, whilst in Figure 7 the barrels 2 appear to be stacked in a pyramid shape, the Figure 6 the upper row has the same number of barrels 2 as the lower row.

This is only possible if the structure of the support 1 also comprises side walls 23 which close the side of the structure.

As illustrated, the upright portion 17 of the second supports 15 curves inwards to allow the insertion and removal of barrels 2 on the supporting means 5 of the row below.

Finally, the connection between different second elements, and between the second elements and the first elements may be achieved, for example, with special inserts 24 which are inserted in the curved tubular portion 9 of each support 1, but in general may have any shape.

Operation of the present invention derives directly from the above description, since the innovative structure of the supporting means 5 in an adjustable form allows the support 1 to be adapted to any type of barrel 2, by simply positioning the mobile idle wheels 6 appropriately.

The present invention brings important advantages.

The supports 1 for barrels 2 made in accordance with the present invention can be adapted to any type of barrel 2.

In this way, they can prevent the barrel 2 from resting its metal hoops 25 on the wheels 6.

Secondly, they can also prevent the barrel 2 from resting on wheels 6 that are too close together, which would compromise barrel stability, or on wheels 6 that are too far apart laterally, which would have a negative effect on the ease with which the barrel 2 could be rotated.

Moreover, a structure of the type in Figure 6 or 7 can be used for simultaneously holding two or more different types of barrels 2 by simply adjusting the relative supporting means 5.

It should also be noticed that the present invention is relatively easy to produce and that even the cost linked to implementation of the invention is not very high.

The invention described may be subject to modifications and variations without thereby departing from the inventive concept.

All details of the invention may be substituted with other, technically equivalent elements and in practice all of the materials used, as well as the shapes and dimensions of the various components, may be any according to requirements.

## Claims

1. A support for barrels (2) comprising a supporting structure (3) with a lower supporting base (4), and means (5) for supporting a barrel (2) resting on its side, the supporting means (5) comprising a plurality of idle wheels (6) designed to act against the side of the barrel (2) to allow its rotation about its own axis; the support being **characterised in that** at least one of the wheels (6) is mobile relative to the others to change the position of the supporting means (5) and to adapt the support (1) to barrels (2) of a different size.

2. The support for barrels according to claim 1, **characterised in that** each of the idle wheels (6) is mobile relative to the others.

3. The support for barrels according to claim 1 or 2, **characterised in that** each wheel (6) mobile relative to the others can be moved along a direction extending mainly parallel with the axis of rotation of the barrel (2).

4. The support for barrels according to claim 3, **characterised in that** each idle wheel (6) mobile relative to the others is mobile along a horizontal direction.

5. The support for barrels according to any of the foregoing claims, **characterised in that** the position of each of the idle wheels (6) mobile relative to the others can be adjusted in a plane transversal to the axis of rotation of the barrel (2).

6. The support for barrels according to claim 5, **characterised in that** each of the idle wheels (6) mobile relative to the others is mobile in a vertical plane.

7. The support for barrels according to any of the foregoing claims, **characterised in that** each mobile idle wheel (6) is connected to the supporting structure (3) by a connecting element (7) attached in such a way that it is mobile to the supporting structure (3).

8. The support for barrels according to claim 7, **characterised in that** the connecting element (7) is equipped with locking means which allow and selectively enable the possibility of the connecting element being moved relative to the supporting structure (3).

9. The support for barrels according to claim 7 or 8, **characterised in that** the connecting element (7) is mounted on a tubular portion (9) of the supporting structure (3), it being possible to move the connecting element along the tubular portion (9) and adjust its angle relative to the tubular portion (9).

10. The support for barrels according to claim 9, **characterised in that** the tubular portion (9) has a circular cross-section and at least one longitudinal guide (10), and **in that** the connecting element (7) has a through-hole (12) whose cross-section matches that of the tubular portion (9) and has at least one counter-guide (13) which can be attached to the longitudinal guide (10), for guiding the connecting element (7) along the tubular portion (9).

11. The support for barrels according to claim 10, **characterised in that** the edge of the connecting element (7) through-hole (12) has a plurality of counter-guides (13), each of which can be attached to the longitudinal guide (10), connection of the guide (10) to each of the counter-guides (13) giving the respective idle wheel (6) a different angular position relative to the tubular portion (9).

12. The support for barrels according to claim 11, **characterised in that** each connecting element (7) is removably mounted on the tubular portion (9), allowing selective attachment of each counter-guide (13) to the guide (10).

13. The support for barrels according to claim 10, 11 or 12, **characterised in that** the guide (10) and each counter-guide (13) consist one of a projecting tooth and the other of a groove.

14. The support for barrels according to any of the foregoing claims, **characterised in that** it comprises a plurality of supporting means (5) for simultaneously supporting a plurality of barrels (2).

15. The support for barrels according to claim 14, **characterised in that** the plurality of supporting means (5) is aligned at least along one horizontal row, for supporting a plurality of reclining barrels (2) arranged side-by-side.

16. The support for barrels according to claim 15, **characterised in that** the plurality of supporting means (5) is aligned along a plurality of horizontal rows on top of one another.

17. The support for barrels according to any of the foregoing claims, **characterised in that** the supporting structure (3) comprises an upright portion (17) extending vertically upwards from the lower supporting base (4) and an upper portion (18) connected to the upright portion (17) and bearing the barrel (2) supporting means (5).

18. The support for barrels according to any of the foregoing claims, **characterised in that** the supporting means (5) comprise four idle wheels (6).

19. A support structure for barrels **characterised in that** it comprises one or more supports (1) for barrels made in accordance with any of the foregoing claims.

20. The support structure for barrels according to claim 19, comprising at least a first base support (1) made in accordance with claim (15) and a plurality of second supports (15) made in accordance with claim (17), arranged in one or more rows on top of one another above the first support (1).

21. The support structure according to claim 20, **characterised in that** each pair of adjacent second supports (15) in the lower first row (20) attached directly to the first base support (1) has between it a seat for a barrel (2) at supporting means (5) present on the first support (1).

22. The support structure according to claim 21, **characterised in that** each second support (1) in the rows above the first row, is positioned above a seat for a barrel (2) in the row below and between two adjacent second supports (15) in said row below, each pair of adjacent second supports (15) in said upper rows forming between them a seat for a barrel (2) at supporting means (5) present on a second support (1) in the row below on which the two second supports (15) of the pair rest.

## Patentansprüche

1. Lagerbock für Fässer (2), enthaltend eine Trägerstruktur (3) mit einer unteren Trägerbasis (4) und Mittel (5) zum Tragen eines auf seiner Seite liegenden Fasses (2), wobei die Trägermittel (5) eine Anzahl von leerlaufenden Rollen (6) enthalten, dazu bestimmt, auf die Seite des Fasses (2) zu wirken, um dessen Umdrehung um seine Achse zu erlauben; wobei der Lagerbock **dadurch gekennzeichnet ist, dass** wenigstens eine der Rollen (6) im Verhältnis zu den anderen beweglich ist, um die Position der Trägermittel (5) zu verändern und den Lagerbock (1) den Fässern (2) von unterschiedlicher Grösse anzupassen.

2. Lagerbock für Fässer nach Patentanspruch 1, **dadurch gekennzeichnet, dass** jede der leerlaufenden Rollen (6) im Verhältnis zu den anderen beweglich ist.

3. Lagerbock für Fässer nach Patentanspruch 1 oder 2, **dadurch gekennzeichnet, dass** jede leerlaufende Rolle (6), die im Verhältnis zu den anderen beweglich ist, sich entlang einer Richtung bewegen kann, die sich vorwiegend parallel zu der Drehachse des Fasses (2) erstreckt.

4. Lagerbock für Fässer nach Patentanspruch 3, **dadurch gekennzeichnet, dass** jede leerlaufende Rolle (6), die im Verhältnis zu den anderen beweglich ist, sich entlang einer horizontalen Richtung bewegen kann.

5. Lagerbock für Fässer nach einem beliebigen der vorstehenden Patentansprüche, **dadurch gekennzeichnet, dass** die Position einer jeden der leerlaufenden Rollen (6), die im Verhältnis zu den anderen beweglich ist, in einer Ebene reguliert werden kann, die quer zu der Drehachse des Fasses (2) verläuft.

6. Lagerbock für Fässer nach Patentanspruch 5, **dadurch gekennzeichnet, dass** jede der leerlaufenden Rollen (6), die im Verhältnis zu den anderen beweglich ist, in einer vertikalen Ebene beweglich ist.

7. Lagerbock für Fässer nach einem beliebigen der vorstehenden Patentansprüche, **dadurch gekennzeichnet, dass** jede bewegliche leerlaufende Rolle (6) an die Trägerstruktur (3) mit Hilfe eines Verbindungselementes (7) angeschlossen ist, befestigt auf solche Weise, dass sie an der Trägerstruktur (3) beweglich ist.

8. Lagerbock für Fässer nach Patentanspruch 7, **dadurch gekennzeichnet, dass** das Verbindungselement (7) mit Spannmitteln versehen ist, welche es dem Verbindungselement erlauben und diesem wahlweise die Möglichkeit bieten, im Verhältnis zu der Trägerstruktur (3) verschoben zu werden.

9. Lagerbock für Fässer nach Patentanspruch 7 oder 8, **dadurch gekennzeichnet, dass** das Verbindungselement (7) an einem rohrförmigen Abschnitt (9) der Trägerstruktur (3) montiert ist, wobei es möglich ist, das Verbindungselement entlang dem rohrförmigen Abschnitt (9) zu bewegen und seinen Winkel im Verhältnis zu dem rohrförmigen Abschnitt (9) zu regulieren.

10. Lagerbock für Fässer nach Patentanspruch 9, **dadurch gekennzeichnet, dass** der rohrförmige Abschnitt (9) einen kreisförmigen Querschnitt und wenigstens eine Längsführung (10) hat, und **dadurch**, dass das Verbindungselement (7) eine durchgehende Bohrung (12) aufweist, deren Querschnitt dem des rohrförmigen Abschnittes (9) angepasst ist, und wenigstens eine Gegenführung (13) hat, welche an der Längsführung (10) befestigt werden kann, um das Verbindungselement (7) entlang dem rohrförmigen Abschnitt (9) zu führen.

11. Lagerbock für Fässer nach Patentanspruch 10, **dadurch gekennzeichnet, dass** der Rand der durchgehenden Bohrung (12) des Verbindungselementes (7) eine Anzahl von Gegenführungen (13), von welchen jede mit der Längsführung (10) verbunden werden kann, wobei die Verbindung der Führung (10) mit einer jeden der Gegenführungen (13) der jeweiligen leerlaufenden Rolle (6) eine unterschiedliche Winkelposition im Verhältnis zu dem rohrförmigen Abschnitt (9) verleiht.

12. Lagerbock für Fässer nach Patentanspruch 11, **dadurch gekennzeichnet, dass** jedes Verbindungselement (7) lösbar an dem rohrförmigen Abschnitt (9) montiert ist, wobei die wahlweise Verbindung einer jeden Gegenführung (13) mit der Führung (10) erlaubt ist.

13. Lagerbock für Fässer nach Patentanspruch 10, 11 oder 12, **dadurch gekennzeichnet, dass** die Führung (10) und jede Gegenführung (13) die eine aus einem hervorstehenden Zahn und die andere aus eine Rille bestehen.

14. Lagerbock für Fässer nach einem beliebigen der vorstehenden Patentansprüche, **dadurch gekennzeichnet, dass** er eine Anzahl von Trägermitteln (5) zum gleichzeitigen Tragen einer Anzahl von Fässern (2) enthält.

15. Lagerbock für Fässer nach Patentanspruch 14, **dadurch gekennzeichnet, dass** die Anzahl von Trägermitteln (5) wenigstens entlang einer horizontalen Reihe ausgerichtet ist, um eine Reihe von Seite an Seite angeordneten liegenden Fässern (2) zu tragen.

16. Lagerbock für Fässer nach Patentanspruch 15, **dadurch gekennzeichnet, dass** die Anzahl von Trägermitteln (5) entlang einer Anzahl von übereinander liegenden horizontalen Reihen ausgerichtet ist.

17. Lagerbock für Fässer nach einem beliebigen der vorstehenden Patentansprüche, **dadurch gekennzeichnet, dass** die Trägerstruktur (3) einen Ständerabschnitt (17) enthält, der sich vertikal von der unteren Trägerbasis (4) aus nach oben erstreckt, und einen oberen Abschnitt (18), angeschlossen an den Ständerabschnitt (17) und die Trägermittel (5) für das Fass (2) haltend.

18. Lagerbock für Fässer nach einem beliebigen der vorstehenden Patentansprüche, **dadurch gekennzeichnet, dass** die Trägermittel (5) vier leerlaufende Rollen (6) enthalten.

19. Trägerstruktur für Fässer nach einem beliebigen der vorstehenden Patentansprüche, **dadurch gekennzeichnet, dass** er eine oder mehrere Lagerböcke (1) für Fässer enthält, hergestellt in Übereinstimmung mit jedem der vorstehenden Patentansprüche.

20. Trägerstruktur für Fässer nach Patentanspruch 19, enthaltend wenigstens einen ersten Basis-Lagerbock (1), hergestellt nach Patentanspruch 15, und eine Anzahl von zweiten Lagerböcken (15), hergestellt nach Patentanspruch 17, angeordnet in einer oder mehreren, eine über der anderen über dem ersten Lagerbock (1) liegenden Reihen.

21. Trägerstruktur für Fässer nach Patentanspruch 20, **dadurch gekennzeichnet, dass** jedes Paar von aneinandergrenzenden zweiten Lagerböcken (15) in der unteren ersten Reihe (20), angeschlossen direkt an den ersten Basis-Lagerbock (1), zwischen sich einen Sitz für ein Fass (2) aufweist, und zwar an Trägermitteln (5), die an dem ersten Lagerbock (1) vorhanden sind.

22. Trägerstruktur für Fässer nach Patentanspruch 21, **dadurch gekennzeichnet, dass** jeder zweite Lagerbock (1) in den Reihen über der ersten Reihe oberhalb eines Sitzes für ein Fass (2) in der darunter liegenden Reihe positioniert ist, und zwischen zwei aneinandergrenzenden zweiten Lagerböcken (15) in der genannten Reihe darunter, wobei jedes Paar von aneinandergrenzenden zweiten Lagerböcken (15) in den genannten oberen Reihen zwischen sich einen Sitz für ein Fass (2) bilden, und zwar an Trägermitteln (5), die an einem zweiten Lagerbock (1) in der Reihe darunter vorhanden sind, auf welcher die beiden zweiten Lagerböcke (15) des Paares liegen.

## Revendications

1. Un support pour tonneaux (2) comprenant une structure de support (3) ayant une base inférieure de support (4), et des moyens (5) pour supporter un tonneau (2) reposant sur son côté, les moyens de support (5) comprenant une pluralité de roues folles (6) destinées à agir contre le côté du tonneau (2) pour permettre la rotation de ce dernier autour de son propre axe ; le support étant **caractérisé en ce qu'**au moins une des roues (6) est mobile par rapport aux autres afin de modifier la position des moyens de support (5) et d'adapter le support (1) à des tonneaux de dimensions différentes.

2. Le support pour tonneaux selon la revendication 1, **caractérisé en ce que** chacune des roues folles (6) est mobile par rapport aux autres.

3. Le support pour tonneaux selon la revendication 1 ou 2, **caractérisé en ce que** chaque roue (6) mobile par rapport aux autres peut être déplacée suivant une direction qui est principalement parallèle à l'axe de rotation du tonneau (2).

4. Le support pour tonneaux selon la revendication 3, **caractérisé en ce que** chaque roue folle (6) mobile par rapport aux autres est mobile suivant une direction horizontale.

5. Le support pour tonneaux selon l'une quelconque des revendications précédentes, **caractérisé en ce que** la position de chacune des roues folles (6) mobiles par rapport aux autres peut être réglée dans un plan transversal à l'axe de rotation du tonneau (2).

6. Le support pour tonneaux selon la revendication 5, **caractérisé en ce que** chacune des roues folles (6) mobiles par rapport aux autres est mobile dans un plan vertical.

7. Le support pour tonneaux selon l'une quelconque des revendications précédentes, **caractérisé en ce que** chaque roue folle (6) est associée à la structure de support (3) au moyen d'un élément d'accouplement (7) qui est fixé de manière à être mobile par rapport à la structure de support (3) elle-même.

8. Le support pour tonneaux selon la revendication 7, **caractérisé en ce que** l'élément d'accouplement (7) est pourvu de moyens de blocage qui rendent sélectivement possible le déplacement de l'élément d'accouplement lui-même par rapport à la structure de support (3).

9. Le support pour tonneaux selon la revendication 7 ou 8, **caractérisé en ce que** l'élément d'accouplement (7) est monté sur une portion tubulaire (9) de la structure de support (3), l'élément d'accouplement pouvant être déplacé le long de la portion tubulaire (9) et son orientation par rapport à cette même portion tubulaire (9) pouvant être réglée.

10. Le support pour tonneaux selon la revendication 9, **caractérisé en ce que** la portion tubulaire (9) présente une section circulaire et au moins un guide longitudinal (10), et **en ce que** l'élément d'accouplement (7) présente un trou débouchant (12) dont la section correspond à celle de la portion tubulaire (9) et comporte au moins un contre-guide (13) qui peut être accouplé au guide longitudinal (10) pour guider l'élément d'accouplement (7) le long de la portion tubulaire (9).

11. Le support pour tonneaux selon la revendication 10, **caractérisé en ce que** le bord du trou débouchant (12) de l'élément d'accouplement (7) présente une pluralité de contre-guides (13) qui peuvent, chacun, être accouplés au guide longitudinal (10), l'accouplement du guide (10) à chacun des contre-guides (13) donnant à la roue folle (6) respective une position angulaire différente par rapport à la portion tubulaire (9).

12. Le support pour tonneaux selon la revendication 11, **caractérisé en ce que** chaque élément d'accouplement (7) est monté de façon amovible sur la portion tubulaire (9), ce qui permet un accouplement sélectif de chaque contre-guide (13) au guide (10).

13. Le support pour tonneaux selon la revendication 10, 11 ou 12, **caractérisé en ce que** le guide (10) et chaque contre-guide (13) consistent l'un en une dent en saillie et l'autre en une rainure.

14. Le support pour tonneaux selon l'une quelconque des revendications précédentes, **caractérisé en ce qu'**il comprend une pluralité de moyens de support (5) pour supporter simultanément une pluralité de tonneaux (2).

15. Le support pour tonneaux selon la revendication 14, **caractérisé en ce que** la pluralité des moyens de support (5) est alignée au moins sur une rangée horizontale afin de supporter une pluralité de tonneaux couchés (2) disposés les uns à côté des autres.

16. Le support pour tonneaux selon la revendication 15, **caractérisé en ce que** la pluralité des moyens de support (5) est alignée sur plusieurs rangées horizontales superposées.

17. Le support pour tonneaux selon l'une quelconque des revendications précédentes, **caractérisé en ce que** la structure de support (3) comprend une partie verticale (17) s'étendant verticalement vers le haut à partir de la base inférieure de support (4) et une partie supérieure (18) fixée à la partie verticale (17) et supportant les moyens (5) de support des tonneaux (2).

18. Le support pour tonneaux selon l'une quelconque des revendications précédentes, **caractérisé en ce que** les moyens de support (5) comprennent quatre roues folles (6).

19. Une structure de support pour tonneaux, **caractérisée en ce qu'**elle comprend un ou plusieurs supports (1) pour tonneaux réalisés selon l'une quelconque des revendications précédentes.

20. La structure de support pour tonneaux selon la revendication 19, **caractérisée en ce qu'**elle comprend au moins un premier support de base (1) réalisé selon la revendication (15) et une pluralité de seconds supports (15) réalisés selon la revendication (17), disposés en une ou plusieurs rangées superposées au-dessus du premier support (1).

21. La structure de support selon la revendication 20, **caractérisée en ce que** chaque paire de seconds supports adjacents (15) de la première rangée inférieure (20) associée directement au premier support de base (1) définit, entre les seconds supports adjacents respectifs, un emplacement pour un tonneau (2) au niveau des moyens de support (5) présents sur le premier support (1).

22. La structure de support selon la revendication 21, **caractérisée en ce que** chaque deuxième support (1) des rangées situées au-dessus de la première rangée est positionné au-dessus d'un emplacement relatif à un tonneau (2) situé dans la rangée inférieure et entre deux seconds supports adjacents (15) de ladite rangée inférieure, chaque paire de seconds supports adjacents (15) desdites rangées supérieures définissant, entre les seconds supports adjacents respectifs, un emplacement pour un tonneau (2) au niveau des moyens de support (5) présents sur un deuxième support (1) de la rangée inférieure sur laquelle reposent les deux seconds supports (15) de la paire.
